# EUROPÄISCHE PATENTSCHRIFT

(11) **EP 1 564 688 B1**
(45) Veröffentlichungstag und Bekanntmachung des Hinweises auf die Patenterteilung: **30.03.2011**
(21) Anmeldenummer: 05100822.5
(22) Anmeldetag: 07.02.2005
(51) Int. Cl.: G07C 5/00, G07C 5/08, G05B 23/02, A01D 41/127

(54) **Verfahren und Überwachungssystem zur Überwachung des Zustands von Arbeitsmaschinen**
Monitoring system and device for monitoring the condition of a working machine
Dispositif et procédé de surveillance pour surveiller l'état d'une machine de travail

(30) Priorität: 12.02.2004 DE 102004006848
(43) Veröffentlichungstag der Anmeldung: 17.08.2005
(73) Patentinhaber: DEERE & COMPANY, Moline, Illinois 61265-8098 (US)
(72) Erfinder: Bischoff, Lutz, 66503, Dellfeld (DE); Beck, Folker, 66506, Massweiler (DE); Braunhardt, Klaus, 66482, Zweibrücken (DE); Herlitzius, Thomas, 66503, Dellfeld (DE)
(74) Vertreter: Holst, Sönke

(56) Entgegenhaltungen:
- EP-A- 0 355 968
- EP-A- 1 111 550
- WO-A-03/058561
- US-A1- 2002 007 237
- US-A1- 2002 107 625

## Beschreibung

Die Erfindung betrifft ein Verfahren und ein Überwachungssystem zur Überwachung des Zustands von Arbeitsmaschinen.

In der DE 101 00 522 A wird eine Überwachungseinrichtung für eine Arbeitsmaschine beschrieben. Sie umfasst einen oder mehrere Sensoren, die von bewegten Elementen der Arbeitsmaschine erzeugte Geräusche erfassen. Die Signale der Sensoren werden mit Vergleichswerten verglichen, um herauszufinden, ob die Arbeitsmaschine korrekt arbeitet oder ein Fehler vorliegt, der Anlass zu einer Reparatur gibt. Die Vergleichswerte stammen von fehlerfreien Arbeitsmaschinen, werden an der untersuchten Arbeitsmaschine aufgenommen oder entsprechen Arbeitsmaschinen mit einem bekannten Fehler.

Die DE 199 38 722 A beschreibt ein Verfahren zur Analyse von Wälzlagern in Maschinen. Durch einen Sensor wird ein Signal aufgenommen, das durch die Abrollbewegung des Wälzlagers erzeugt wird. Die Amplitude des Signals wird ausgewertet, um das Vorliegen und gegebenenfalls die Tiefe eines Schadens in einer Wälzlagerlauffläche zu ermitteln. Die Analyse beruht auf einem dynamischen Modell des Wälzlagers in der Maschine. Dabei wird eine Datenbank verwendet, die Daten hinsichtlich bestimmter Eigenschaften des Lagers enthält. Bei einer Erfassung einer noch nicht in die Datenbank eingetragenen Maschine vor Ort werden die Eigenschaften des Lagers erfasst, zum Teil durch Messungen. Außerdem werden die Geräusche des Lagers erfasst. Nach einer erfolgreichen Messung, d. h. wenn ein Schaden vorliegt, fließen alle Maschinen- und Lagerdaten in die zentrale Datenbank zurück. Auf diese Weise wird die Datenbank laufend verbessert.

In der DE 102 28 389 A wird ein Schwingungssensor zur Zustandsüberwachung von rotierenden Bauteilen oder Lagern beschrieben, dessen Ausgangssignale digitalisiert und durch einen Algorithmus analysiert werden. Dabei werden die aktuellen Messwerte kontinuierlich mit den definierten und voreingestellten Schadensmustern verglichen, was eine selbstlernende Schadensmustererkennung ermöglichen soll.

Eine Analyse von Schadensmustern wird auch in der DE 102 20 124 A offenbart. Dort werden die Messdaten zunächst durch Vergleich mit gespeicherten Mustern einer Klasse zugeordnet und mittels eines neuronalen Netzwerks verarbeitet. In diesem Netzwerk sind verschiedene Schadensklassen gespeichert. Lässt sich ein neuer Schaden nicht eindeutig den vorhandenen Klassen zuordnen, wird eine neue Klasse eröffnet.

Die DE 101 45 571 A beschreibt ein System zur Überwachung von Baumaschinen. Es wird auf bekannte Verfahren verwiesen, nach denen Daten über den Betriebszustand einer defekten Baumaschine einschließlich gemessener Fehlerdaten und eines auf einer Sichtprüfung basierenden Fehlercodes drahtlos an die Managementabteilung eines Herstellers gesandt werden. Dort erfolgt eine Untersuchung der Daten und ggf. eine Veranlassung einer Reparatur. Die Kriterien für einen Schaden sind fest vorgegeben.

In der US 2002/0007237 A wird ein Verfahren und System zur Diagnose von Fahrzeugen beschrieben. Mehrere Fahrzeuge werden mit Sensoren zur Erfassung ihres Betriebszustands ausgestattet. Ein lokaler Server enthält eine Datenbank mit Referenzdaten, die mit von den Sensoren der Fahrzeuge bereitgestellten Daten verglichen werden, um mögliche Fehler des Fahrzeugs zu erfassen. Wenn der Vergleich einen Hinweis auf einen möglichen Fehler ergibt, wird eine Infor-mation hinsichtlich des Vorliegens eines möglichen Fehlers an einen Bediener gegeben. Letzterer kann in eine Eingabeeinrichtung Informationen über einen tatsächlich aufgefundenen Fehler eingeben. Diese Informationen werden an eine zentrale Schadensdatenbank übersandt, die anhand der empfangenen Daten aktualisiert wird und ihrerseits aktualisierte Daten an die Datenbanken der lokalen Server weitergibt. Das beschriebene System eignet sich nur für eine einzige Art von Fahrzeugen.

Es ist somit eine Reihe von Systemen zur automatischen Analyse von Schäden an Maschinen bekannt, die auf einer Analyse aufgenommener Vibrationen und anderer Betriebsdaten der Maschine beruhen. Ein Problem bei der automatischen Analyse von Schäden ist die Zuordnung zwischen den Messwerten der Sensoren und möglichen Fehlern.

Bei Wälzlagern lassen sich beherrschbare mathematische Modelle aufstellen, die eine relativ einfache Zuordnung der Messdaten zum Zustand des Lagers erlauben (s. DE 199 38 722 A und DE 102 28 389 A). Bei komplizierteren Maschinen, wie Kolbenverdichtern und Pumpen, bietet sich gemäß der DE 102 20 124 A der Einsatz lernfähiger neuronaler Netzwerke an, die in aufwändiger Weise zu programmieren sind. Hierbei ist es notwendig, den Zusammenhang zwischen den gemessenen Kenngrößen und dem tatsächlichen Grad des Schadens zu erkennen, was für die in der DE 102 20 124 A genannten Maschinen noch möglich ist. Bei Arbeitsmaschinen ist ein derartiger Zusammenhang nur sehr begrenzt evaluierbar, da sie kurze Entwicklungszeiten haben, recht komplex sind und relativ hohe Montagetoleranzen auftreten. Der Aufwand, der für eine experimentelle Ermittlung der notwendigen Informationen erforderlich wäre, ist nicht akzeptabel.

Die der Erfindung zu Grunde liegende Aufgabe wird darin gesehen, ein Verfahren und ein Überwachungssystem zur Überwachung des Zustands von Arbeitsmaschinen bereitzustellen, das bei relativ komplizierten Arbeitsmaschinen anwendbar ist, bei denen das Schwingungsverhalten und andere Wirkzusammenhänge, wie Temperaturänderungen (beispielsweise in Lagern, Kupplungen) im Zusammenhang mit Bauteilfehlern, sich nicht durch einfache theoretische Modelle beschreiben und ebenso einfach analysieren lassen.

Diese Aufgabe wird erfindungsgemäß durch die Lehre der Patentansprüche 1 und 7 gelöst, wobei in den weiteren Patentansprüchen Merkmale aufgeführt sind, die die Lösung in vorteilhafter Weise weiterentwickeln.

Es wird ein Verfahren und ein Überwachungssystem zur Überwachung des Zustands einer Mehrzahl von Arbeitsmaschinen vorgeschlagen. Die Arbeitsmaschinen sind mit Sensoren ausgestattet, die ihren Betriebszustand und/oder Geräusche oder Vibrationen erfassen, die von beweglichen Elementen der Arbeitsmaschine erzeugt werden. Für jede der einzelnen Arbeitsmaschinen ist eine erste Datenbank vorgesehen, die Konstruktionsdaten der Maschine enthält, d. h. Informationen über den jeweiligen physikalischen Aufbau der Maschine. Außerdem ist eine zweite Datenbank vorhanden, die Referenzdaten enthält. Diese Datenbank kann beispielsweise Informationen über die bei bestimmten Schadensfällen auftretenden Geräusche bzw. Vibrationen und/oder andere typische Messwertverläufe bei Schadensfällen enthalten. Es besteht die Möglichkeit, verschiedene Messgrößen wie Temperatur, Drehzahlen, Leistung usw. zu berücksichtigen. Die Kombination von verschiedenen Messgrößen ist möglicherweise ein besseres Indiz für einen Fehler als eine einzige Messgröße, bzw. kann für eine bessere Lokalisierung eines Fehlers nützlich sein. Ein Beispiel wäre ein höherer Geräuschpegel mit gleichzeitigem Abfall einer Drehzahl, oder ein Geräusch mit gleichzeitiger Temperatur- und/ oder Druckänderung. Letzteres könnte für die Diagnose von Hydrauliksystemen denkbar sein. Die Signale der Sensoren werden anhand der ersten Datenbank und der zweiten Datenbank analysiert. Anhand der ersten Datenbank ist erkennbar, welche Signalverläufe bei der gegebenen Konfiguration der Maschine als Fehlerindikatoren in Frage kommen. Die gemessenen Signalverläufe werden nur mit den möglichen Fehlersignalverläufen verglichen, d. h. es werden nur die anhand der ersten Datenbank aus der zweiten Datenbank ausgewählten Referenzdaten zu einem Vergleich herangezogen. Anhand der zweiten Datenbank ist erkennbar, ob ein Signalverlauf als kritisch anzusehen ist oder nicht. Gegebenenfalls wird ein Bediener der Arbeitsmaschine oder ein Verantwortlicher informiert, indem ihm das Vorliegen eines möglichen Fehlers und die ermittelte Fehlerstelle signalisiert wird. Der Verantwortliche kann über eine drahtlose oder drahtgebundene Verbindung, insbesondere Telefonverbindung, email o. ä. herbeigerufen werden, um den Fehler zu begutachten. Dieses Vorgehen bietet sich insbesondere dann an, wenn die Arbeitsmaschine unbemannt arbeitet. Der Bediener kann nunmehr die Fehlerstelle inspizieren und ggf. den Schaden beheben oder einen Reparaturdienst heranziehen. Stellt der Bediener tatsächlich den diagnostizierten Fehler fest, kann er eine entsprechende Eingabe machen. Anderenfalls kann er eingeben, dass kein Fehler gefunden wurde, oder dass ein Fehler an anderer Stelle aufgefunden wurde. Die Messwerte vor Eintritt der Fehlerdiagnose und/oder die daraus abgeleitete Analyseergebnisse werden an eine zentrale Schadensdatenbank übermittelt, die beispielsweise durch den Hersteller der Arbeitsmaschinen gepflegt und betrieben wird. Hier treffen sukzessive neue Messwerte, die zu Fehlern geführt haben, und die Informationen des Bedieners zu den Fehlern ein. Die zentrale Schadensdatenbank wird somit nach und nach aktualisiert. Sie dient auch zum Aktualisieren der zweiten Schadensdatenbank für die Maschine.

Auf diese Weise wird nach und nach eine zentrale Schadensdatenbank aufgebaut, die auf tatsächlichen Schadensfällen basiert. Die für die Analyse der Messwerte verwendete zweite Datenbank wird basierend auf diesen Schadensfällen aktualisiert. Sie wird daher immer zuverlässiger. Durch das ständige Aktualisieren der zweiten Datenbank wird die Diagnose auf immer mehr Bauelemente erweitert und die Lokalisierung der Fehler immer weiter verfeinert. Dadurch wird die Qualität und der Automatisierungseffekt des Überwachungssystems ständig verbessert. Durch die hohe Anzahl an im Einsatz befindlichen Arbeitsmaschinen und die unterschiedlichen auftretenden Einsatz- und Belastungsfälle kann schnell ein umfangreicher, statistisch abgesicherter Erfahrungsschatz zusammengetragen werden. Dieser kann genutzt werden, um schnell ein intelligentes Überwachungssystem zu bekommen.

Die Sensoren erlauben eine Kontrolle, ob eine durchgeführte Reparatur erfolgreich war. Es bietet sich daher an, nach der Durchführung einer Reparatur die Messwerte der Sensoren erneut einer Analyse auf Fehler der Maschine hin zu unterziehen.

Nach Durchführung einer Reparatur ist vorgeschlagen, die erste Datenbank zu aktualisieren, damit die erneuerten Teile bzw. ihr erneuerter Zustand bei späteren Auswertungen berücksichtigt werden können. Analog ist die erste Datenbank zu ändern, wenn die Arbeitsmaschine durch Ein- und/oder Ausbau von Teilen geändert wird.

Die Erfindung eignet sich insbesondere zur Überwachung von landwirtschaftlichen Arbeitsmaschinen, insbesondere Erntemaschinen.

In den Zeichnungen ist ein nachfolgend näher beschriebenes Ausführungsbeispiel der Erfindung dargestellt. Es zeigt:
- Fig. 1: eine schematische Seitenansicht eines landwirtschaftlichen Axialmähdreschers, der als Beispiel für eine Arbeitsmaschine herangezogen wird, und
- Fig. 2: ein Flussdiagram des Überwachungssystems des Mähdreschers.

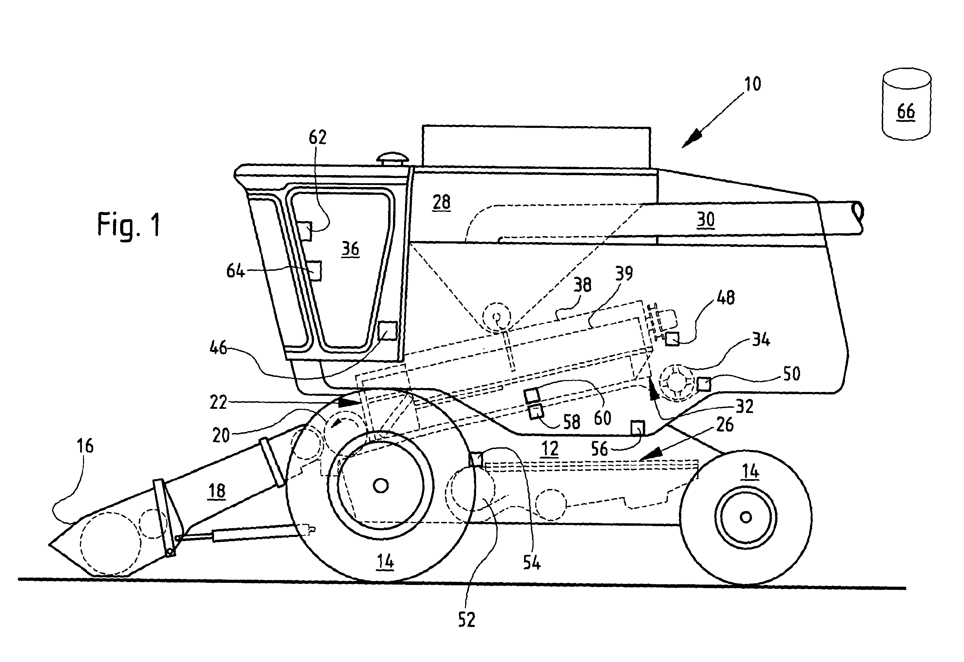

Die Figur 1 zeigt einen landwirtschaftlichen Mähdrescher 10 mit einem Fahrgestell 12 und sich von diesem nach unten erstreckenden Bodenlaufrädern 14, an dessen Beispiel die Erfindung erläutert wird. Eine Erntegutbergungsvorrichtung 16 in Form eines Schneidwerks wird verwendet, Erntegut aufzunehmen und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlassübergangsbereich an eine Axialtrennvorrichtung 22 weiter.

Die Axialtrennvorrichtung 22 drischt und trennt das geerntete Gut. Korn und Spreu fallen durch Roste am Boden der Axialtrennvorrichtung 22 in ein Reinigungssystem 26. Das Reinigungssystem 26 entfernt die Spreu und führt das saubere Korn einem (nicht gezeigten) Kornelevator zu. Der Kornelevator legt das saubere Korn in einem Korntank 28 ab. Das saubere Korn im Korntank 28 kann durch eine Entladeschnecke 30 in einen Anhänger oder Lastwagen entladen werden. Gedroschenes, vom Korn befreites Stroh wird aus der Axialtrennvorrichtung 22 durch einen Auslass 32 heraus zu einer Abgabetrommel 34 geführt. Die Axialtrennvorrichtung 22 umfasst ein zylindrisches Rotorgehäuse 38 und einen im Rotorgehäuse 38 angeordneten Rotor 39. Die Abgabetrommel 34 wirft das Stroh am rückwärtigen Ende des Mähdreschers 10 aus.

Die Bedienung des Mähdreschers 10 erfolgt von einer Fahrerkabine 36 aus. In der Fahrerkabine 36 ist auch eine Rechnereinrichtung 46 angeordnet, die mit verschiedenen Sensoren verbunden ist.

Ein Sensor 48 ist an der Axialtrennvorrichtung 22 angebracht und erfasst Schwingungen des Rotorgehäuses 38. In der Nähe der Abgabetrommel 34 ist am Fahrgestell 12 ein Sensor 50 befestigt, der von der Abgabetrommel 34 verursachte Schwingungen der sie tragenden Teile des Fahrgestells 12 erfasst. In der Nähe eines Gebläses oder Ventilators 52 der Reinigungseinrichtung ist am Fahrgestell 12 ein Sensor 54 angeordnet. Ein Drehzahlsensor 58 erfasst die Drehzahl des Rotors 39 induktiv durch einen am Rotor 39 angebrachten Permanentmagneten 60. Ein Sensor 56 ist oberhalb des Reinigungssystems 26 am Fahrgestell 12 angebracht. Die Sensoren 48, 50, 54 und 56 sind an sich bekannte Sensoren, die zur Erzeugung von Signalen eingerichtet sind, die eine Information über die von den Sensoren 48, 50, 54 und 56 aufgenommenen Schallwellen enthalten. Es kann sich insbesondere um akustische oder Beschleunigungs-Sensoren handeln.

Der Sensor 48 stellt aufgrund seiner Lage primär (hauptsächlich) eine Information über die Bewegung des Rotorgehäuses 38 und somit durch vom drehenden Rotor 39 verursachte Schwingungen bereit. Analog stellt der Sensor 50 primär eine Information über von der Abgabetrommel 34 verursachte Schwingungen des Fahrgestells 12 bereit. Der Sensor 54 stellt primär Informationen über die vom Ventilator 52 verursachten Schwingungen bereit. Der Sensor 56 stellt eine Information über die Schwingungen des Fahrgestells bereit, die von allen beweglichen Elementen des Mähdreschers 10 verursacht werden.

Die Sensoren 48, 50, 54, 56 und 58 sind elektrisch (oder optisch), vorzugsweise über eine Busleitung, mit der Rechnereinrichtung 46 verbunden. Die Rechnereinrichtung 46 digitalisiert die analogen Signale der Sensoren, wertet sie aus und gibt dem Bediener in der Fahrerkabine 36 auf einer Anzeigeeinrichtung 62 eine Fehlermeldung, wenn aus den Signalen ein Fehler des Mähdreschers 10 erkennbar ist.

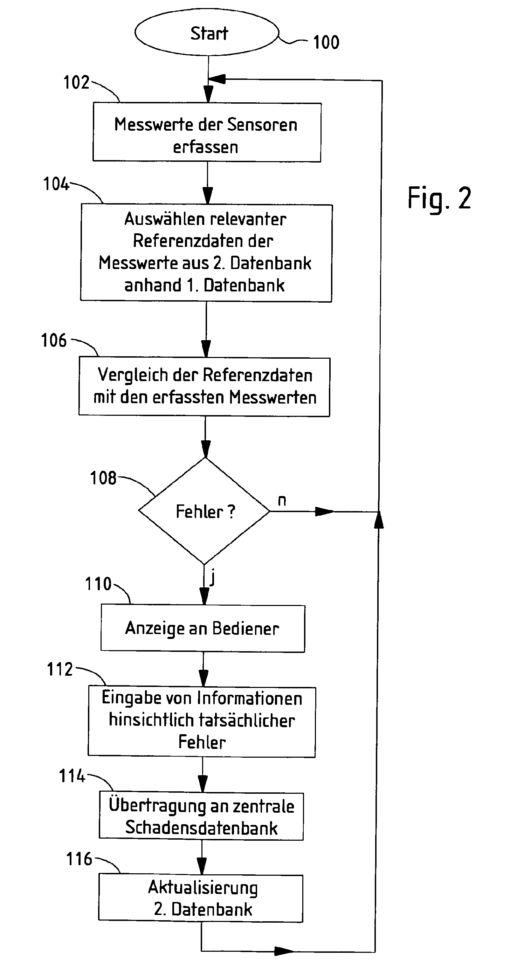

Die Figur 2 gibt ein Flussdiagramm wieder, nach dem das Überwachungssystem des Mähdreschers 10 arbeitet. Nach dem Start im Schritt 100 werden im Schritt 102 in der Rechnereinrichtung 46 die Messwerte der Sensoren 48, 50, 54, 56 und 58 erfasst. Vorzugsweise, nachdem Messwerte über eine bestimmte Zeitdauer aufgenommen wurden, so dass eine Spektralanalyse (Fouriertransformation oder dgl.) möglich war, wird im Schritt 104 eine erste Datenbank abgefragt. In dieser Datenbank sind alle relevanten physikalischen Eigenschaften des Mähdreschers eingetragen, insbesondere Informationen hinsichtlich seiner beweglichen Elemente. So ist in der ersten Datenbank eingetragen, dass er eine Axialtrennvorrichtung 22 (und daher keine Strohschüttler) aufweist, einschließlich ihrer Bauteilnummer. Weiterhin ist das Vorhandensein der Abgabetrommel 34 und das Fehlen eines Strohhäckslers eingetragen. Die erste Datenbank ist in einem Speicher der Rechnereinrichtung 46 abgelegt.

Die Daten in der ersten Datenbank sind maschinenspezifisch konstruktiv festgelegt und ändern sich höchstens bei einem Umbau oder einer Umrüstung an der Maschine. In diesem Fall müssen die Daten einfach angepasst werden können. Sie könnten zum Beispiel beim Start des Überwachungssystems aus einer maschinenspezifischen Datei ausgelesen werden. Dabei können verschiedene mögliche Maschinenkonfigurationen berücksichtigt werden, wobei dann bei einer Umrüstung eine entsprechende Änderung der Konfigurationsdaten zu erfolgen hat. Bei einer konstruktiven Aufrüstung oder Modernisierung des Mähdreschers 10 muss eine entsprechende neue Datei erstellt werden oder eine Änderung der Datei erfolgen, beispielsweise durch das mit dem Umbau befasste Werkstattpersonal.

Basierend auf der ersten Datenbank liegt der Rechnereinrichtung 46 eine Information vor, wie der Mähdrescher 10 konfiguriert ist. Anhand dieser Information werden im Schritt 104 aus einer zweiten Datenbank, die ebenfalls in einem Speicher der Rechnereinrichtung 46 abgelegt ist, für die spezifische Konfiguration des Mähdreschers 10 relevante Referenzdaten ausgelesen. Derartige Referenzdaten können beispielsweise zeit- und/oder frequenzabhängig abgespeicherte Messwerte sein, die bei einer Abgabetrommel 34 mit defekten Lagern aufgenommen wurden, und/oder Soll- und Schwellenwerte der Sensorsignale und/oder Referenzmuster für die Kombination von bestimmten Sensorsignalen. Es können beispielsweise auch Temperaturverläufe abgespeichert sein, die bei defekten Lagerungen der Axialtrennvorrichtung 22 auftreten. Es werden immer nur die Referenzdaten verwendet, die für die aktuelle Konfiguration der Maschine zutreffen. So werden die Referenzdaten der Axialtrennvorrichtung 22 anhand ihrer Bauteilnummer ausgewählt, um korrekte Referenzdaten verwenden zu können. Außerdem kann in der zweiten Datenbank der Trend von Ergebnissen der bisherigen Analyse, zugeordnet zu bestimmten Baugruppen, abgespeichert sein. Die erste und zweite Datenbank können auch ineinander integriert werden; es ist in vielen Fällen aber sinnvoller, sie zu trennen.

Mit der gewählten Struktur der Datenbanken ist es möglich, die gesamte Hard- und Software unabhängig vom Maschinentyp und Maschinenmodell zu gestalten. Maschinenspezifische Daten können einfach über die Software geladen werden.

Basierend auf bestimmten Signalpegeln, Signalmustern und/oder typischer Kombinationen von Signalen verschiedener Sensoren kann der Maschinenzustand überwacht werden. Die gemessenen Signale oder Signalmuster können einem bestimmten Bauteil und einem bestimmten Schaden am Bauteil zugeordnet werden. Näheres zu dieser Zuordnung ist der DE 101 00 522 A und den anderen in der Beschreibungseinleitung genannten Druckschriften entnehmbar, deren Offenbarung durch Verweis mit in die vorliegenden Unterlagen aufgenommen wird. Anhand der Referenzdaten und der erfassten Messwerte, die im Schritt 106 miteinander verglichen werden, erfolgt somit im Schritt 108 durch die Rechnereinrichtung 46 eine Abfrage, ob anhand dieses Vergleichs ein Fehler festgestellt wurde. Ist das nicht der Fall, folgt wieder der Schritt 102. Es kann im Schritt 108 auch erkannt werden, dass sich ein Fehler langsam entwickelt. Anhand der Ergebnisse der Signalanalyse kann auch schon in gewissem Umfang auf den Typ des Schadens geschlossen werden, z. B. Unwucht, Anschlagen von Teilen, lose Verbindungen.

Wurde hingegen ein sich entwickelnder oder schon vorliegender Fehler des Mähdreschers 10 festgestellt, folgt der Schritt 110, in dem über die Anzeigeeinrichtung 62 dem Bediener angezeigt wird, dass ein Fehler vorliegt. Außerdem wird angezeigt, wo die Fehlerstelle zu finden ist. Der Bediener kann sich dann an die angezeigte Fehlerstelle begeben und den Fehler überprüfen. Zusätzlich können Vorschläge für eine zielgerichtete Fehlerdiagnose durch den Bediener und Vorschläge für die Reparatur gegeben werden. Für diesen Dialogbetrieb können dem Bediener oder einem herangezogenen Servicetechniker Informationen aus dem Reparaturhandbuch und aus dem Ersatzteilkatalog elektronisch zur Verfügung gestellt werden. Dabei kann interaktiv und/oder iterativ vorgegangen werden, d.h. es werden Hinweise bzw. Fragen angezeigt und der Bediener gibt ein, ob ein bestimmter Sachverhalt gegeben ist oder nicht. Auf diese Weise kann der Bediener durch die Rechnereinrichtung 46 unterstützt den Fehler einkreisen. Liegt tatsächlich ein Fehler vor, kann der Bediener ihn beheben, soweit möglich, oder einen Reparaturdienst heranziehen. Entscheidet der Bediener, dass ein Schaden vorhanden, aber im Moment noch akzeptabel ist, kann er eine entsprechende Eingabe vornehmen und den Fehler mit einer Gewichtung versehen (z. B. leicht, mittel, schwer). In diesem Fall wird das Überwachungssystem das Symptom für diesen Fehler konzentriert beobachten und melden, wenn der Trend in einen kritischen Bereich geht.

Der Bediener oder der Reparaturdienst bestätigt nach Beendigung der Reparatur, dass tatsächlich ein Fehler vorlag, indem im Schritt 112 eine entsprechende Eingabe in eine mit der Rechnereinrichtung 46 verbundene Eingabeeinrichtung 64, die eine Tastatur umfasst, vorgenommen wird. Hierbei kann auch eine Bewertung des Fehlers vorgenommen werden, z. B. unter Verwendung der Kriterien leicht, stark, kritisch, Ausfall o. ä.. So kann die automatische Gewichtung des Fehlers durch das Überwachungssystem verbessert werden.

Falls der festgestellte Fehler nicht festgestellt wurde oder an anderer Stelle ein Fehler vorlag, kann der Bediener eine entsprechende Eingabe in die Eingabeeinrichtung 64 eingeben. Analog kann auch eine Eingabe vorgenommen werden, wenn die Rechnereinrichtung 46 im Schritt 108 keinen Fehler festgestellt hat, sondern der Bediener ihn von sich aus feststellte oder ein größerer Schaden auftrat, der anderweitig feststellbar war, insbesondere zum Stillstand des Mähdreschers 10 führte. Es wird in der Regel eine Information über die Art und den Ort des Fehlers eingegeben. In diesem Fall besteht die Möglichkeit, dass die Rechnereinrichtung 46 die zweite Datenbank noch einmal durchsucht, um festzustellen, ob sich hier eine bisher nicht registrierte Änderung in den Signalen oder Signalmustern erkennen lässt und sich diese möglichen Änderungen auch sinnvoll zu dem entsprechenden Bauteil und Schaden zuordnen lassen.

Dem Schritt 112 folgt der Schritt 114, in dem eine Übertragung der Messwerte und/oder der daraus abgeleiteten Analyseergebnisse sowie der Eingaben des Bedieners von der Rechnereinrichtung 46 an eine zentrale Schadensdatenbank 66 (in Figur 1 schematisch eingezeichnet) erfolgt. Die zentrale Schadensdatenbank 66 befindet sich an einer beliebigen Stelle, in der Regel von dem Mähdrescher 10 beabstandet. Sie wird vorzugsweise vom Hersteller des Mähdreschers 10 betrieben. Die Übertragung der Messwerte kann drahtlos über eine Datenverbindung über das Telefonnetz oder das Internet in Form einer E-Mail o. ä. erfolgen. Denkbar ist auch, dass die genannten Informationen zunächst in der Rechnereinrichtung 46 abgespeichert bleiben und an die zentrale Schadensdatenbank übertragen werden, wenn sich der Mähdrescher 10 in einer Werkstatt befindet oder durch vom Hersteller autorisiertes Personal gewartet wird. Falls die Rechnereinrichtung 46 austauschbar ist oder im Fehlerfall auszutauschen ist, sind Möglichkeiten vorgesehen, um die lokal gespeicherten und noch nicht an die zentrale Schadensdatenbank 66 übermittelten Daten auf die neue Rechnereinrichtung 46 zu übertragen. Die neuen Informationen werden in der zentralen Schadensdatenbank 66 abgespeichert. Dabei kann eine Umformung der Eingaben des Bedieners in eine Form erfolgen, die später von der Rechnereinrichtung 46 verarbeitet werden kann. Diese Umformung kann maschinell und/oder durch einen Mitarbeiter erfolgen.

Im folgenden Schritt 116 wird die zweite Datenbank des Mähdreschers 10 aktualisiert, basierend auf der inzwischen aktualisierten Schadensdatenbank 66. Die Übertragung erfolgt analog der Übertragung in Schritt 114, d. h. beispielsweise drahtlos über eine Datenverbindung über das Telefonnetz oder in Form einer E-Mail oder durch Herunterladen von Daten aus dem Internet oder bei einer Wartung vor Ort oder in einer Werkstatt durch autorisiertes Personal. Es folgt dann wieder der Schritt 102. Anders als dargestellt, kann die Aktualisierung der zweiten Datenbank jedoch auch schon unmittelbar nach dem Schritt 112 erfolgen, so dass die neuen Daten bei einer nachfolgenden Überwachung unverzüglich berücksichtigt werden können.

Im Schritt 106 sind Konstellationen möglich, bei denen die Messwerte unterschiedlichen Fehlern zugeordnet werden können. In der zweiten Datenbank ist deshalb vorzugsweise eine Information hinterlegt, wie oft die in Betracht kommenden Fehler in der Vergangenheit aufgetreten sind. Dem Bediener wird vorzugsweise der am häufigsten aufgetretene Fehler zuerst angezeigt. Alternativ werden ihm die möglichen Fehler mit der zu erwartenden (aus der Häufigkeit abgeleiteten) Wahrscheinlichkeit angezeigt.

Manche Fehler treten relativ selten auf, so dass ihre Aufnahme in die zentrale Schadensdatenbank und in die zweite Datenbank einen angesichts ihrer geringen Wahrscheinlichkeit unangemessenen Aufwand bedeuten würde. Es bietet sich daher an, diese Fehlerverläufe zunächst zwischenzuspeichern, in der Regel in der zentralen Schadensdatenbank 66, bis die Anzahl ihres Auftretens einen bestimmten Schwellenwert übersteigt. Erst danach werden diese Fehlerverläufe in die zentrale Schadensdatenbank 66 und von dort aus dann in die zweite Datenbank der Arbeitsmaschinen übertragen.

Bei Auslieferung der ersten Maschinen einer neuen Serie, für die nur Fehlererfahrungen aus ersten Versuchen vorliegen, kann die zweite Datenbank zunächst nur diese ersten Referenzdaten enthalten. Später werden durch das erfindungsgemäße Verfahren die Referenzdaten angesammelt.

Anzumerken bleibt, dass es hinreichen kann, wenn die zweite Datenbank nur die Referenzdaten enthält, die durch die erste Datenbank vorgegeben werden. Dadurch kann der Speicherbedarf vermindert werden. Die erste Datenbank ist bei dieser Ausführungsform in der zweiten Datenbank enthalten. Bei einer Änderung der Arbeitsmaschine ist nur die zweite Datenbank mit den nunmehr relevant gewordenen Referenzdaten (d. h. die Referenzdaten, die dem neuen Zustand der Maschine entsprechen) zu aktualisieren.

Die Vorteile der erfindungsgemäßen Vorgehensweise machen sich insbesondere dann bemerkbar, wenn mehrere Arbeitsmaschinen (wie der Mähdrescher 10) überwacht werden. Jeder Fehler, der an einer der Arbeitsmaschinen auftritt und behoben wird, kann kurze Zeit später an allen anderen überwachten Arbeitsmaschinen nachgewiesen werden, schon bevor ein größerer Schaden auftritt, der kostenaufwändig zu beheben wäre.

## Patentansprüche

1. Verfahren zur Überwachung des Zustands von Arbeitsmaschinen mit folgenden Schritten:
Bereitstellen mehrerer Arbeitsmaschinen,
Bereitstellen von Sensoren (48, 50, 54, 56, 58) zur Erfassung des Betriebszustands der Arbeitsmaschinen, insbesondere der von beweglichen Elementen der Arbeitsmaschine erzeugten Geräusche und/oder Vibrationen,
Bereitstellen einer ersten arbeitsmaschinenspezifischen Datenbank mit Konstruktionsdaten für jede der Arbeitsmaschinen,
Bereitstellen einer zweiten arbeitsmaschinenspezifischen Datenbank mit auswertungsspezifischen Referenzdaten für jede der Arbeitsmaschinen,
Erfassen von Messwerten der Sensoren (48, 50, 54, 56, 58) einer Arbeitsmaschine,
Analysieren der Messwerte der Sensoren (48, 50, 54, 56, 58) hinsichtlich möglicher Fehler der Arbeitsmaschine unter Verwendung der ersten und zweiten Datenbank,
falls das Analysieren der Messwerte auf einen Fehler der Arbeitsmaschine hinweist, Abgabe einer Information an einen Bediener hinsichtlich des Vorliegens eines möglichen Fehlers und einer ermittelten Fehlerstelle,
Bereitstellen einer Eingabeeinrichtung (64), die betreibbar ist, Eingaben eines Bedieners hinsichtlich eines von ihm tatsächlich aufgefundenen Fehlers der Arbeitsmaschine anzunehmen,
Übertragen der Messwerte und/oder daraus abgeleiteter Analyseergebnisse und von Eingaben des Bedieners an eine zentrale Schadensdatenbank (66) und Aktualisieren der zentralen Schadensdatenbank (66) anhand der empfangenen Daten, und
Aktualisieren der zweiten Datenbank basierend auf der aktualisierten Schadensdatenbank (66).

2. Verfahren nach Anspruch 1, wobei nach Eingabe einer Durchführung einer Reparatur eine weitere Analyse der Messwerte der Sensoren (48, 50, 54, 56, 58) durchgeführt wird.

3. Verfahren nach Anspruch 1 oder 2, wobei nach Eingabe einer Durchführung einer Reparatur und/oder Modifikation der Arbeitsmaschine die erste arbeitsmaschinenspezifische Datenbank aktualisiert wird.

4. Verfahren nach einem der vorhergehenden Ansprüche, wobei die Übertragung der Messwerte und/oder daraus abgeleiteter Analyseergebnisse und der Informationen des Bedieners an die zentrale Schadensdatenbank (66) nur von Zeit zu Zeit erfolgt, beispielsweise bei einer Wartung in einer Werkstatt.

5. Verfahren nach einem der vorhergehenden Ansprüche, wobei die zweite Datenbank eine Information hinsichtlich der Häufigkeit enthält, mit der ein Fehlertyp in der Vergangenheit aufgefunden wurde, und bei Auftreten eines Fehlers, für den ähnliche Messwerte mit unterschiedlichen Ursachen vorliegen, bevorzugt der Fehler dem Bediener angegeben wird, der die höhere Häufigkeit aufweist.

6. Verfahren nach einem der vorhergehenden Ansprüche, wobei ein Fehlerverlauf nur dann in die zentrale Schadensdatenbank (66) eingetragen wird, wenn die Anzahl seines Auftretens einen Schwellenwert übersteigt.

7. Überwachungssystem zur Überwachung des Zustands von Arbeitsmaschinen, eingerichtet zur Durchführung des Verfahrens nach einem der vorhergehenden Ansprüche.

8. Arbeitsmaschine, insbesondere landwirtschaftliche Arbeitsmaschine, vorzugsweise Erntemaschine, mit einem Überwachungssystem nach Anspruch 7.

## Claims

1. Method for monitoring the condition of working machines, having the following steps of:
providing a plurality of working machines,
providing sensors (48, 50, 54, 56, 58) for detecting the operating condition of the working machines, in particular the noises and/or
vibrations produced by moving elements of the working machine,
providing a first working-machine-specific database having design data for each of the working machines,
providing a second working-machine-specific database having evaluation-specific reference data for each of the working machines,
detecting measured values from the sensors (48, 50, 54, 56, 58) of a working machine,
analysing the measured values from the sensors (48, 50, 54, 56, 58) with respect to possible faults of the working machine using the first and second databases,
if the analysis of the measured values indicates a fault of the working machine, delivering an item of information relating to the presence of a possible fault and a determined fault location to an operator,
providing an input device (64) which can be operated to accept inputs from an operator with regard to a fault of the working machine which has actually been found by the operator,
transmitting the measured values and/or analysis results derived from the latter and inputs by the operator to a central damage database (66) and updating the central damage database (66) using the received data, and
updating the second database on the basis of the updated damage database (66).

2. Method according to Claim 1, the measured values from the sensors (48, 50, 54, 56, 58) being analysed further after the performance of a repair has been input.

3. Method according to Claim 1 or 2, the first working-machine-specific database being updated after the performance of a repair and/or modification of the working machine has/have been input.

4. Method according to one of the preceding claims, the measured values and/or analysis results derived from the latter and the information from the operator being transmitted to the central damage database (66) only from time to time, for example during servicing in a workshop.

5. Method according to one of the preceding claims, the second database containing an item of information relating to the frequency with which a type of fault has been found in the past, and, when a fault for which there are similar measured values with different causes occurs, that fault which has the higher frequency preferably being indicated to the operator.

6. Method according to one of the preceding claims, a fault profile being entered in the central damage database (66) only when the number of times it occurs exceeds a threshold value.

7. Monitoring system for monitoring the condition of working machines, which is set up to carry out the method according to one of the preceding claims.

8. Working machine, in particular an agricultural working machine, preferably a harvester, having a monitoring system according to Claim 7.

## Revendications

1. Procédé de surveillance de l'état de machines de travail comprenant les étapes suivantes :
fourniture de plusieurs machines de travail,
fourniture de capteurs (48, 50, 54, 56, 58) pour détecter l'état de fonctionnement des machines de travail, notamment des bruits et/ou des vibrations généré(e)s par les éléments mobiles de la machine de travail,
fourniture d'une première base de données spécifique aux machines de travail avec des données de construction pour chacune des machines de travail,
fourniture d'une deuxième base de données spécifique aux machines de travail avec des données de référence spécifiques à l'évaluation pour chacune des machines de travail,
acquisition de valeurs mesurées des capteurs (48, 50, 54, 56, 58) d'une machine de travail,
analyse des valeurs mesurées des capteurs (48, 50, 54, 56, 58) en ce qui concerne d'éventuels défauts de la machine de travail en utilisant la première et la deuxième bases de données,
si l'analyse des valeurs mesurées indique un défaut de la machine de travail, remise d'une information à un opérateur concernant la présence d'une défaut possible et un point de défaut déterminé,
fourniture d'un dispositif de saisie (64) qui peut être utilisé pour prendre en charge les saisies d'un opérateur concernant un défaut de la machine de travail réellement découvert par lui,
transmission des valeurs mesurées et/ou des résultats d'analyse qui en sont dérivés et des saisies de l'opérateur à une base de données des défauts centrale (66) et actualisation de la base de données des défauts centrale (66) au moyen des données reçues et actualisation de la deuxième base de données en se basant sur la base de données des défauts (66) actualisée.

2. Procédé selon la revendication 1, dans lequel, après la saisie d'une exécution d'une réparation, une analyse supplémentaire des valeurs mesurées des capteurs (48, 50, 54, 56, 58) est exécutée.

3. Procédé selon la revendication 1 ou 2, dans lequel, après la saisie d'une exécution d'une réparation et/ou d'une modification de la machine de travail, la première base de données spécifique aux machines de travail est actualisée.

4. Procédé selon l'une des revendications précédentes, dans lequel la transmission des valeurs mesurées et/ou des résultats d'analyse qui en sont dérivés et des informations de l'opérateur à la base de données des défauts centrale (66) n'a lieu que de temps en temps, par exemple lors d'une maintenance dans un atelier.

5. Procédé selon l'une des revendications précédentes, dans lequel la deuxième base de données contient une information concernant la fréquence à laquelle un type de défaut a été constaté dans le passé et, en cas d'apparition d'un défaut pour lequel il existe des valeurs mesurées similaires avec des causes différentes, le défaut qui est indiqué à l'opérateur est de préférence celui qui présente la fréquence la plus élevée.

6. Procédé selon l'une des revendications précédentes, dans lequel une évolution du défaut n'est enregistrée dans la base de données des défauts centrale (66) que lorsque le nombre de ses occurrences dépasse une valeur de seuil.

7. Système de surveillance pour surveiller l'état de machines de travail, conçu pour exécuter le procédé selon l'une des revendications précédentes.

8. Machine de travail, notamment machine de travail agricole, de préférence moissonneuse, équipée d'un système de surveillance selon la revendication 7.
